# EUROPEAN PATENT SPECIFICATION

(11) **EP 2 097 151 B1**
(45) Date of publication and mention of the grant of the patent: **27.02.2013**
(21) Application number: 06821647.2
(22) Date of filing: 19.12.2006
(51) Int. Cl.: B01D 29/46, B01D 29/66

(54) **REVERSE-FLOW SELF-RINSING FLUID FILTERS**
SELBSTSPÜLENDE RÜCKSTROMFLUIDFILTER
FILTRES DE FLUIDE À RINÇAGE AUTOMATIQUE PAR CONTRE-COURANT

(43) Date of publication of application: 09.09.2009
(73) Proprietor: Arkal Filtration Systems C.S. Ltd., Kibbutz Beit-Zera 15135 (IL)
(72) Inventor: BEN-HORIN, Raanan, 15135 Kibbutz Beit-zera (IL)
(74) Representative: Litton, Rory Francis
(86) International application number: PCT/IL2006/001460
(87) International publication number: WO 2008/075327

(56) References cited:
- WO-A-99/30796
- DE-A1- 10 012 186

## Description

### FIELD OF THE INVENTION

The present invention relates to fluid filters. The invention particularly concerns discs filters of the reverse flow, self-rinsing or flushing type as widely used in agricultural water irrigation installations. More specifically the invention is closely related - though not limited - to filters of the kind disclosed in our International Publication WO 99/30796 published June 24, 1999.

### BACKGROUND OF THE INVENTION

It has been recognized that the efficiency of the conventional disc filters of the kind referred to above derogates as function of the increase of the filter discs diameter, and more so with the increase of their number, namely to the overall axial length of the filter unit, and in particular in cases where the filters are vertically positioned.

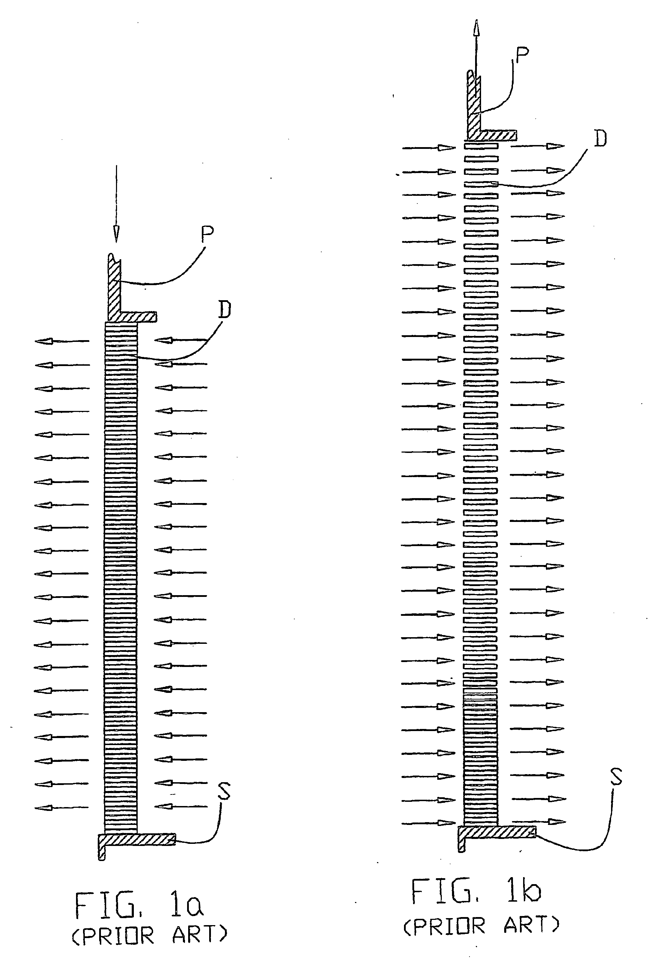

Figs. 1a and 1b schematically explains this effects: During the filtering stage the discs D forms a compact battery or stack, compressed under the force of a spring loaded piston P against a fixed support S; when rinsing is requested, the piston P is relived and rises up, allowing the separation of the discs from each other and the formation of the gaps for the rinsing water to flow therebetween.

However, due to the accumulated self-weight, the discs located nearer to the bottom of the battery are impeded from spacing away, as shown in

Fig. 1b. The efficiency of the rinsing thus decreases in proportion with the distance of any given disc from the bottom, fixed support S of the pile.

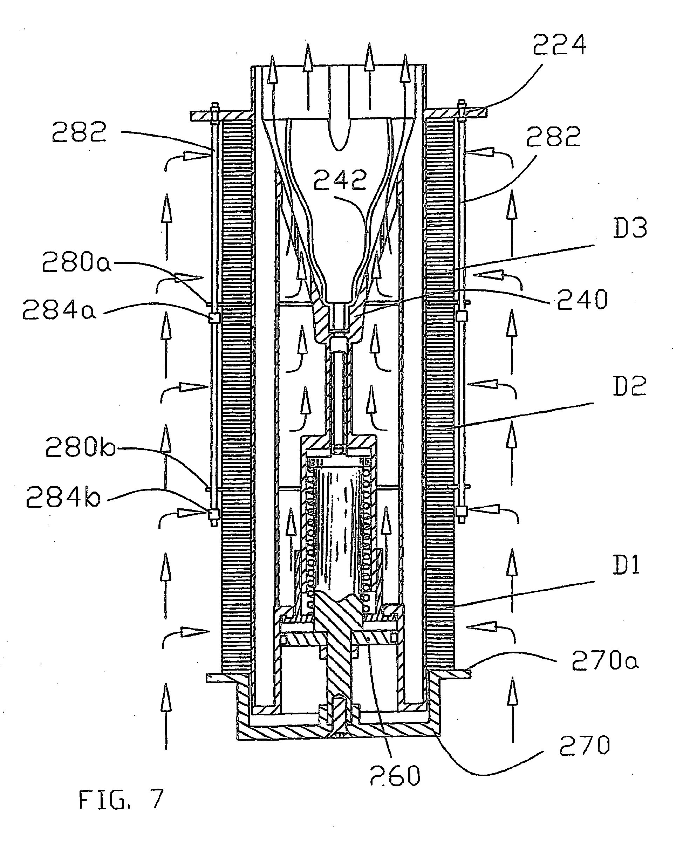

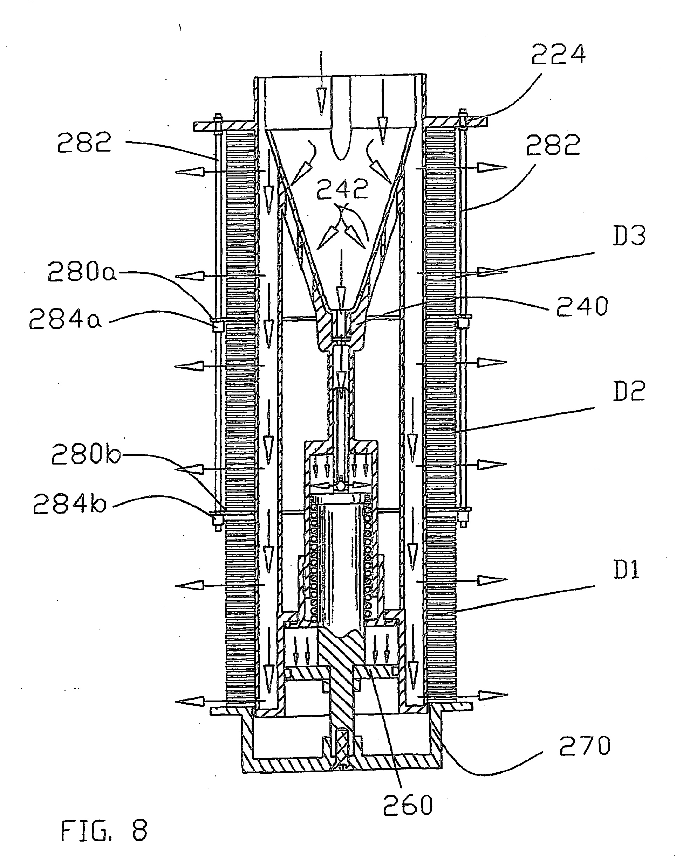

The same applies should the fixed support be located at the top and the movable piston at the bottom, (see Figs. 7 and 8 below).

PCT Patent Publication Number WO9930796 (AR KAL PLASTICS PRODUCTS) discloses a conventional liquid filtering device comprising a pack of cylindrical filter member discs with an arrangement for reversed, filter flushing flow cycles. An integrally formed filter core member comprises tubular nozzled conduits so that water under pressure within the conduits becomes discharged in jet forms to enable the free rotation of the filter discs. A one-way, funnel-shaped rubber sleeve valve permits the flow of filtered water to the outlet port but impedes the flow of flushing water from the outlet port through the filter member in the reverse direction toweards the inlet port.

German Patent Publication Number DE 100 12 186 (SMC CORP.) discloses a conventional filter assembly which is unblocked by back-flushing the filter assembly with a washing fluid. The filter has a housing with inlet and an outlet. The filter consists of a large number of stacked/coated elastic filter chips, separated by gaps through which the fluid passes during filtration. The filter also has an actuator which expands the filter gaps. The gaps are surrounded by sprung elements which expand under back-flow fluid pressure from a back-flow fluid passage.

It is therefore the prime object of the present invention to overcome the above described deficiency of the conventional filtering devices.

It is a further object of the invention to gain control over the self-weight factor in order to neutralize the undesirable effect thereof.

It is a further object of the invention to divide the pack of discs into several groups, each group being neutralized from the weight of the group next above it during the reverse flow rinsing stage of operation.

### SUMMARY OF THE INVENTION

According to the invention there is provided a fluid filtering device comprising a housing with an inlet port for the fluid to be filtered and an outlet port for the filtered fluid; a battery of filtering discs positioned in the path of the fluid between the inlet and the outlet ports; means for applying a compacting force on the battery of discs during the filtering stage of the device, and means for reliving said force for enabling the displacement of the discs away from each other during the rinsing stage wherein the fluid flows from the outlet port through gaps formed between adjacent discs, characterized in that partition means are provided between any given number of discs, dividing the battery of discs into groups whereby in the rising stage each group is supported on one of said partition means.

The partition means may comprise rings coupled to the piston via step-wise spacing means so that movement of the piston in the discs relieving direction is transmitted first to the partition ring which is closer to the piston, than to a more remotely located partition ring, and so forth with respect to the remaining partition rings.

### BRIEF DESCRIPTION OF THE DRAWINGS

These and additional constructional features and advantages of the invention will be more readily understood in the light of the ensuing description of several preferred embodiments thereof, given by way of example only, with reference to the accompanying drawings wherein:-
Fig. 1a schematically represents a compact pack of discs during the filtering stage;
Fig. 1b illustrates the phenomenon of uneven distribution of the discs during the reverse-flow stage in the conventional devices;
Fig. 2 is a three-dimensional view, partly in cross-section, of a filtering device according to the first preferred embodiment of the present invention ir the filtering stage;
Fig. 3a is an axial cross-sectional view of a filtering device of Fig. 2;
Fig. 3b is a radial cross-section taken along line III - III of Fig. 3a;
Fig. 4 is a cross-sectional view of the filter of Fig. 3 during the reverse-flow stage;
Fig. 5 is a cross-sectional view of a filtering device according to a modified embodiment of the present invention, during the filtering stage;
Fig. 6 shows the filter of Fig. 5 during the reverse-flow stage;
Fig 7 is a cross-sectional view of further embodiment of the invention, in the filtering stage;
Fig. 8 shows the filter of Fig. 7 in the reverse-flow stage;
Fig. 9 is a still further embodiment in the filtering stage;
Fig. 10 shows the filter of Fig. 9 in the reverse-flow stage;
Fig. 11 is a still further embodiment in the filtering stage; and
Fig. 12 shows the filter of Fig. 11 in the reverse-flow stage;

### DETAILED DESCRIPTION OF THE PREFERRED EMBODIMENT

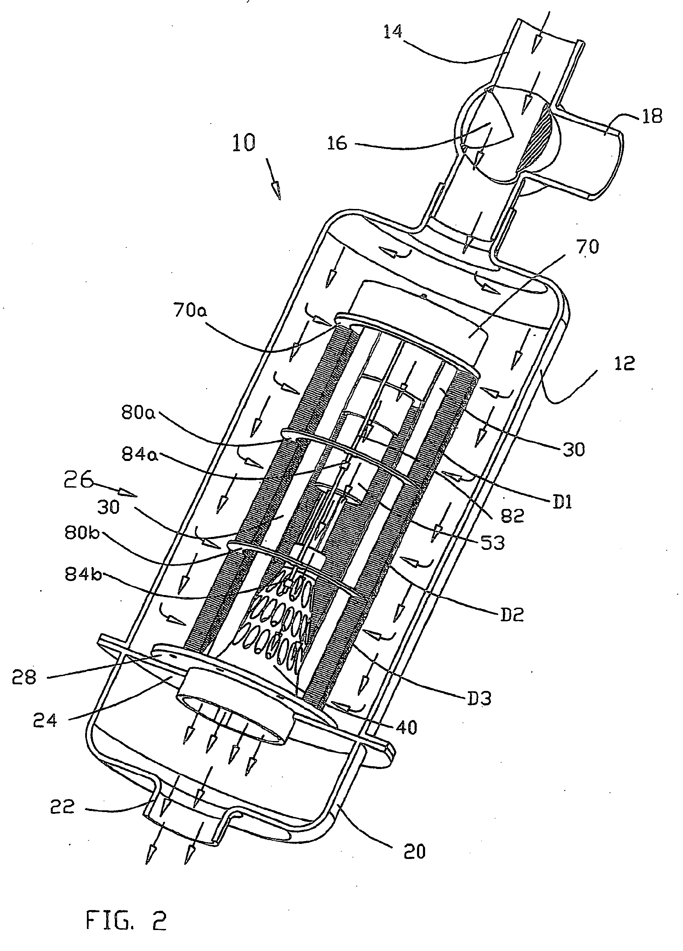

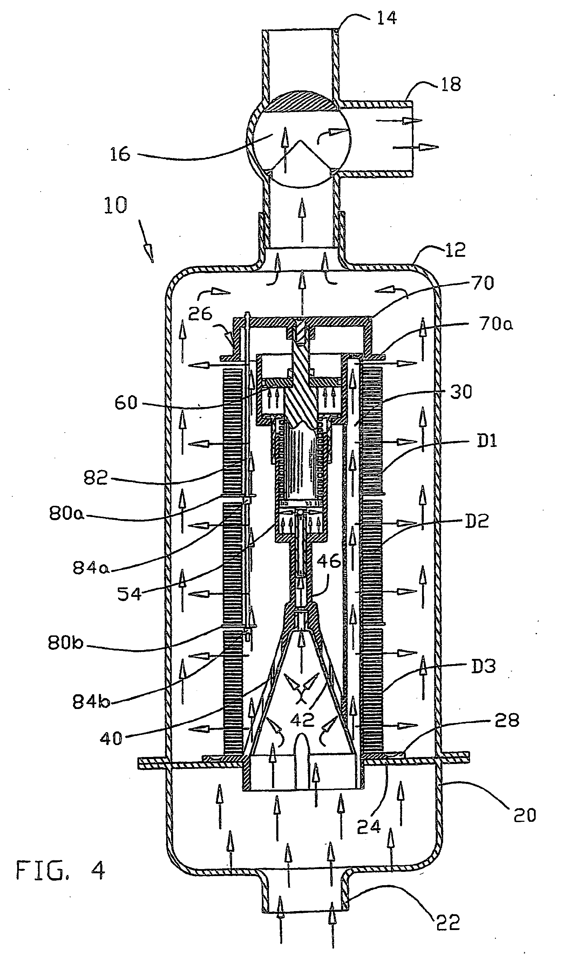

The filtering device generally denoted 10 in Figs. 2-4 comprises a main housing section 12 with inlet port section 14. A rotary, two-way valve 16 is installed to control the flow of the incoming fluid (mostly water) into the main housing section 12, or to block it and communicate the housing 12 with rinse water outlet 18 (see Fig. 4).

An outlet port housing section 20 is mounted to the housing 12, defining outlet port 22 for the filtered water, as well as inlet port for the back-flow, rinsing water (Fig. 4).

The housing sections 12 and 22 are separated by partition wall 24. Main filter device structure, generally denoted 26, is mounted to the partition wall 24 by flange 28. It comprises a cage formed of three (or more) nozzled tubes 30 around which the battery of filter discs D is supported. Rinsing water is supplied through the tubes 30 during the reverse-flow stage. Hence, the tubes are open at the bottom and closed at the top side thereof.

A unidirectional valve assembly is provided for controlling the flow of water in accordance with the desired two operational stages of the device 10.

In the given example, the valve assembly comprises a cone-shaped perforated cup 40. A flexible lining sleeve 42, (e.g. of rubber), fitting the inside of the cup 40, is placed therein, provided with a hollow, nipple-like extension 44 serving both for affixing the sleeve within the cup 40 and for leading flow of water therethrough for displacing the discs compacting piston assembly as will be described further below (see path of flow in Fig. 4).

A preferably square (for the sake of rigidness), hollow rod 46 merges from the top of the cup 40 to spring housing member 50. The components 30, 40, 46, 50 and 64 are preferably integrally molded by plastic injection, which is regarded as an additional important advantage of the present invention.

A flanged cap 52 is screw-threaded over the spring housing member 50. Coil spring 54 is compressed between the cap 52 and a shoulder 56a of piston carrier 56.

A piston or plunger 60 is affixed to extension rod 56b, e.g. by retainer ring 62, and surrounded by cylinder 64. The rod 56b is connected to a bell-shaped, discs compacting cap 70, e.g. by screw 72. Rim 70a of the cap 70 fits over the pack of discs, pressing it against the fixed support consisting of the flange 28.

It should be emphasized at this point that the details of construction as above described are not essential to the application of the invention, and other design features, known per se in the art of filter device in general, might as well be adopted, although not recommended in the present context as will be explained further below.

The major point of invention resides in the provision of partition rings 80a, 80b (two in the illustrated example), fitting in-between respective discs, dividing the battery into three groups D₁, D₂, and D₃ of more-or-less equal number of discs.

A series of discs-spacing rods 82 (three in the illustrated example) are provided, depending from the flange 70a and extending parallel to and within (or outside) the battery of discs. The rods 82 extend freely through ears provided for that purpose around the partition rings 80a and 80b, in vertical alignment. Stoppers 84a and 84b are affixed to the spacing rods 82. The stoppers 84a associated with the partition ring 80a are located at a certain, first distance below ring 80a. The stoppers 84b associated with the ring 80b are located at a second, greater distance below the partition ring 80b.

The operation of the filtering device 10 is as follows.

During the normal filtering stage, water (or other fluid) enters the unit 10 through inlet port 14 and forced to penetrate through the battery of discs D. The discs are in a compact state under the force of the spring 54, applied by the cap 70 (the division of the discs into three groups D₁, D₂ and D₃ by the partition rings 80a and 80b has no effect at this stage).

The filtered water flows through the openings in cup 40 while the rubber sleeve 42 shrinks inwardly and does not interfere with such flow.

Once it is determined (by automatic gauging or timer) that a rinsing cycle should start, the direction of the flow is reversed, namely from the outlet 22 in the direction of the inlet 14 which, however, is blocked by closing the valve 16 (see Fig. 4).

The rubber sleeve 42 becomes immediately swelled under the pressure of the incoming water and close the openings of the cone-shaped cup 40. Hence, water is forced to enter the tubes 30 and jet out radially through their nozzles against the filtering discs.

Simultaneously, water is directed through the rod 46, into the space below the piston carrier and further to the space below the piston 60, which starts to rise under the water pressure. This upward movement is transferred to the cap 70 with flaring flange 70a, thus relieving the pressure applied to the discs and facilitating the spacing apart thereof as requested from the effective flushing effect.

The division of the discs into three groups D₁, D₂ and D₃ is attained gradually: First, the partition ring 80a is raised by stopper element 84a, and only later on, ring 80b becomes raised, depending on the initial distance left between the ring 80b and the stopper 84b. (which is necessarily greater than the initial distance between the stopper 84a and the partition ring 80a).

Each group of discs (amounting in the present example to abut 1/3 of the total number of discs) is independent regarding the spacing away of discs for rinsing purposes, and therefore the effect of the accumulated self-weight is effectively reduced (approximately by 2/3 with respect to the group D₃ and by 1/3. with respect to group D₂).

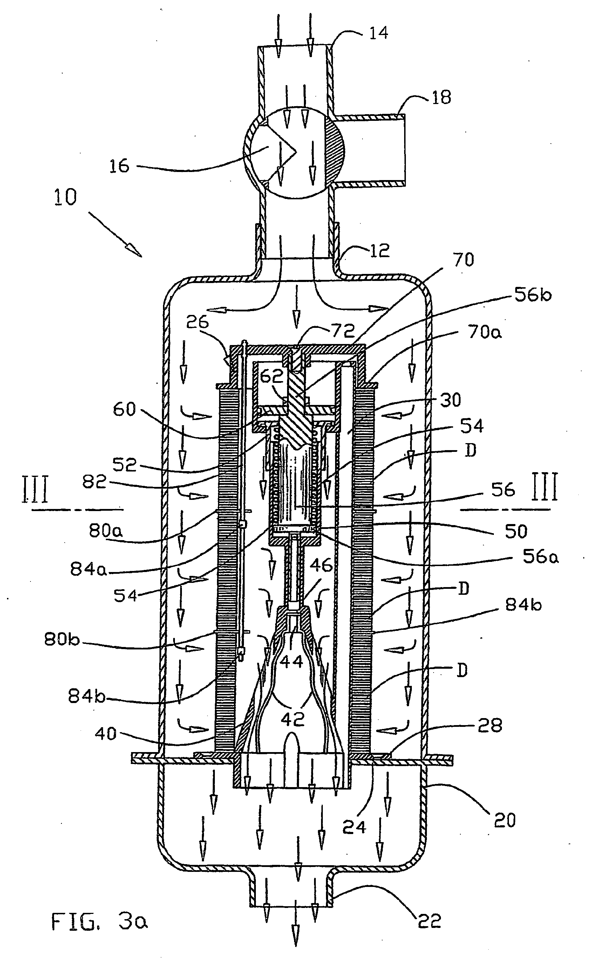

Rinsing water is drained out of the system through outlet 18. At the end of the flushing stage, the operative state of Fig. 3a is resumed by again reversing the water flow direction.

several variations and modifications of the invention as above exemplified will now be described (through in lesser detail), using as much as applicable designation numerals similar to those applied to the former embodiments.

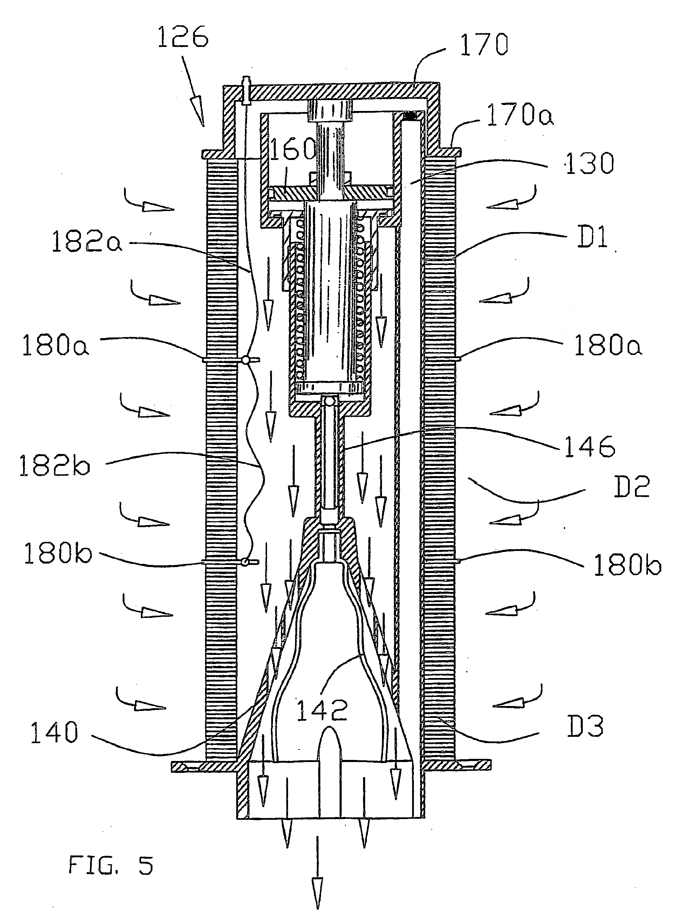

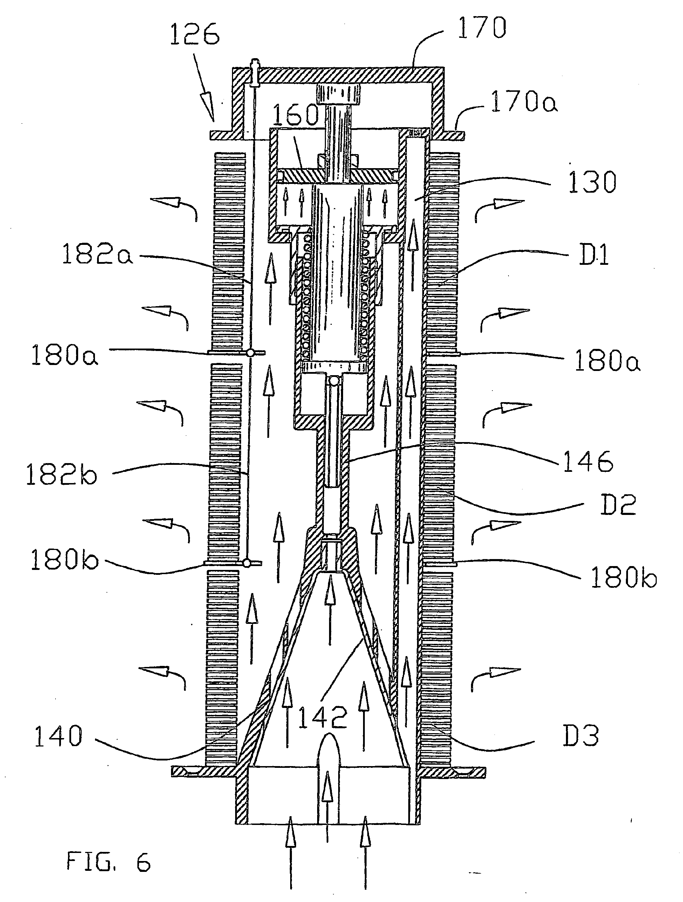

The filtering assembly 126 of Figs. 5 and 6 is most close to the preceding embodiment, differing only in that the spacing rods 82a and 83b are replaced by wires 182a and 182b tied to the partition rings 180a and 180b, respectively, being of different lengths as required for the step-wise, progressive separation of the discs groups D₁ and D₂.

The remaining details of construction and the mode of operation remain substantially unchanged and therefore need no further explanations.

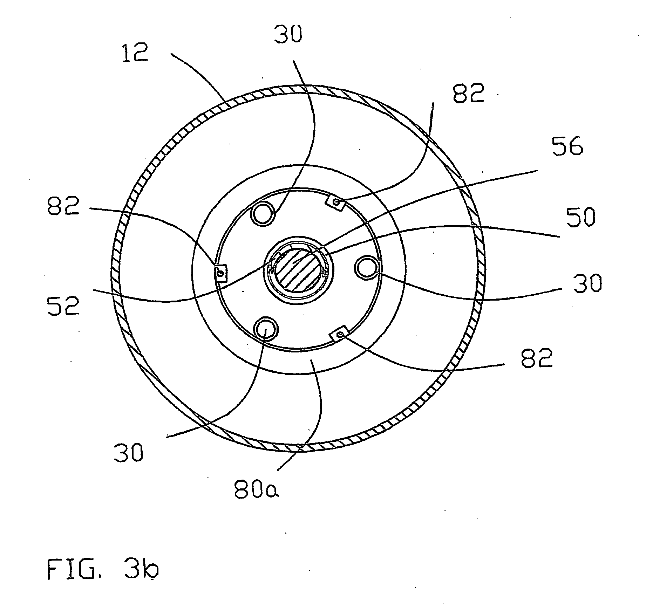

The embodiment of Figs. 7 and 8 is essentially an 'upside-down' version of that of Figs. 3-4, namely that the piston assembly is installed at the bottom of the unit.

The gravity force of the discs in this case acts reversely, namely that the battery normally rests on the flange 270a of the piston cap 270. Therefore, the spacing rods 282 are affixed to the plate 224 at the outlet side of the filter assembly.

Note that the rods 282 extend outside the discs battery, a design variation that is applicable to any of the previously disclosed embodiments.

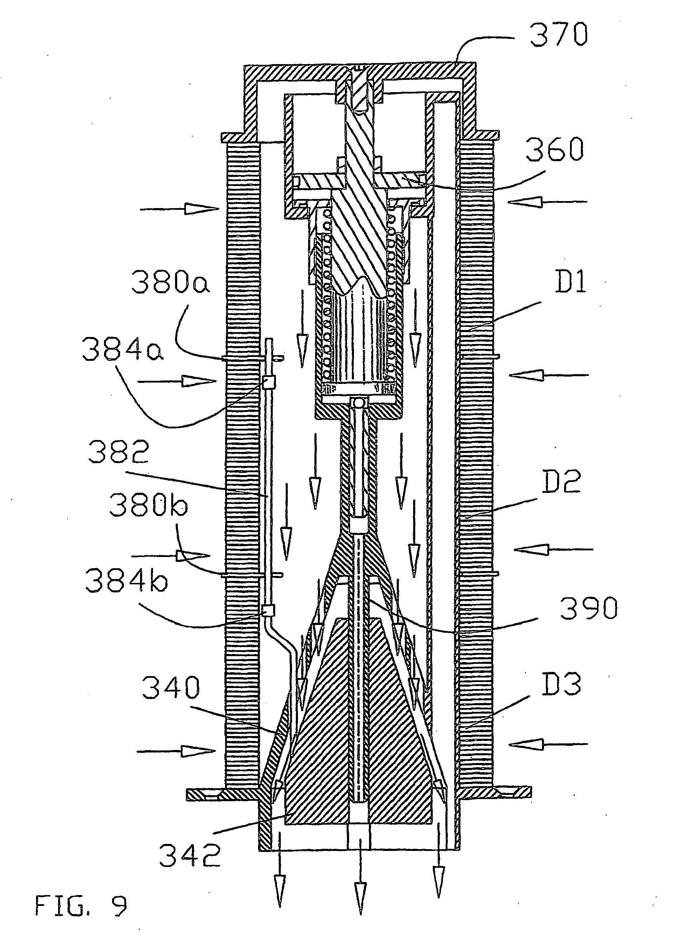

The embodiment of Figs. 9-10 concern modified spacing rods and the means for their displacement when modes change-over occur.

Rather that the flexible sleeve 42 (Fig. 1) functioning as a one-way valve, there is used a solid, cone-shape valve body 342, fitting the inside of the cup 340. The valve body 344 is freely reciprocable over a guide tube 390.

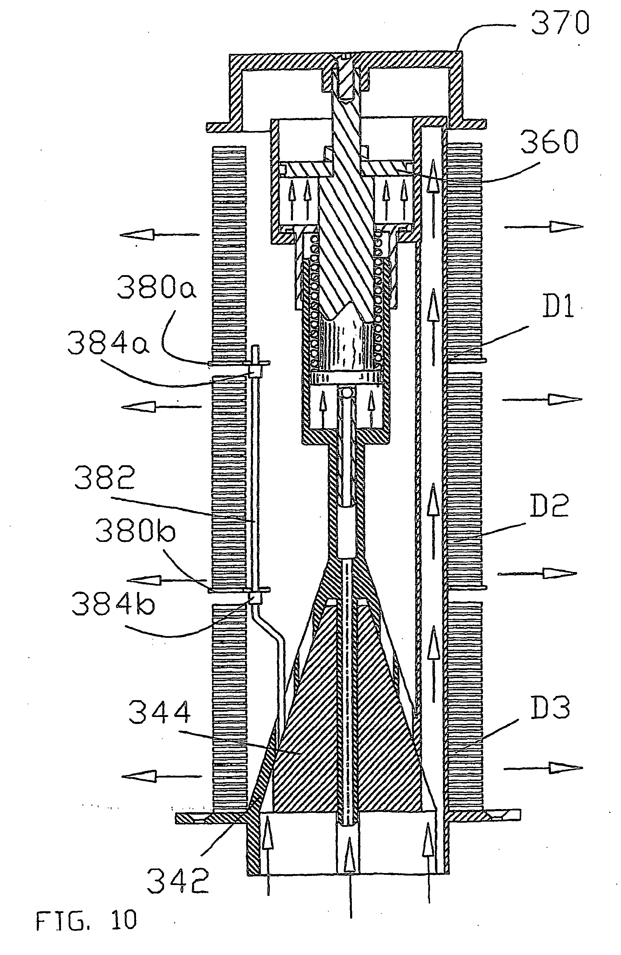

Attached to or integrally formed with the valve body 342 are spacing rods 382, provided with stoppers 384a and 384b in the already familiar manner. The transformation from filtering mode (Fig. 9) into rising mode (Fig. 10) takes place as follows. During the filtering stage, the water can flow through the opening of the cup 344 to the outlet as marked by the arrows. The battery of discs is in the compact stage.

Upon reverse of the flow direction (Fig. 10) the impact and pressure of the flushing water causes the closing of the valve body 344 as well as the rising of the piston 360 and cap 370.

The very movement of valve body 344 causes first the positioning of the stopper 384a underneath the partition ring 380a and lifting of the first group of discs D₁, and then, following a further movement of the valve body 344, the lifting of the second group D₂.

Finally the openings of the cup 342 become closed and the full-reverse-flow rising cycle takes place.

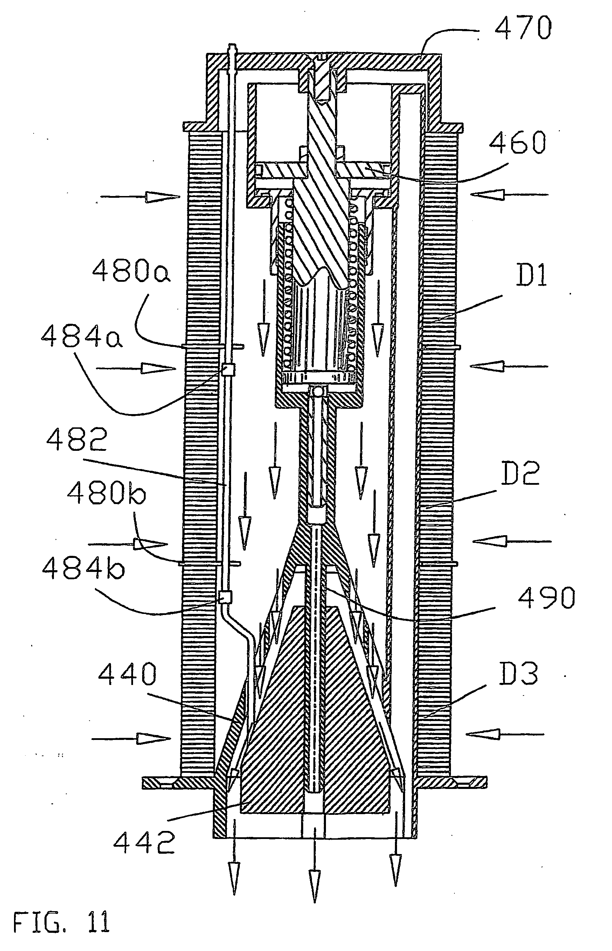

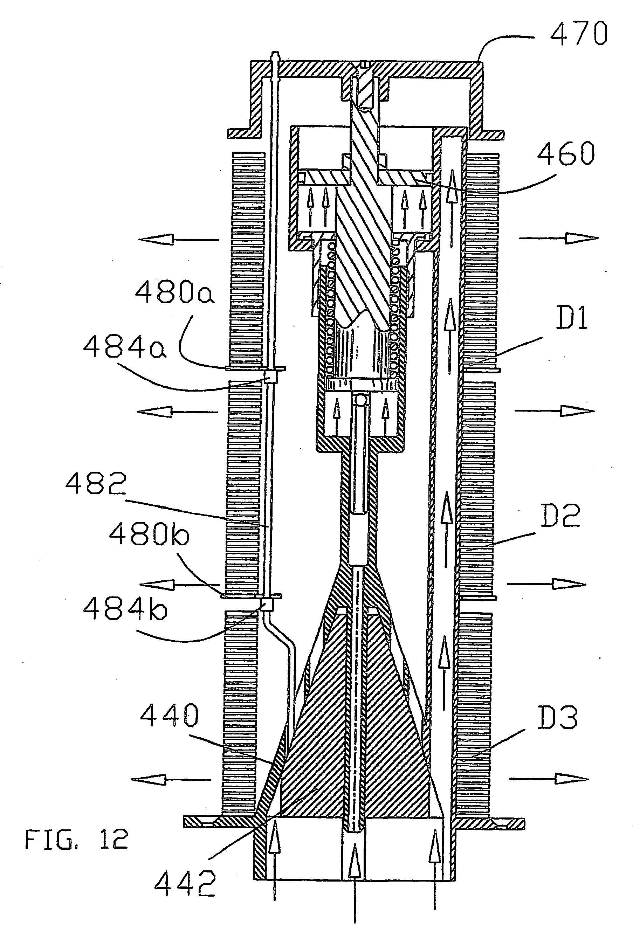

The embodiment of Figs. 11-12 differs from the preceding one in that the closing of valve body 442 is further enhance be being coupled to the piston cap 470 (and not fully dependent upon the pressure of the incoming water). Hence, the spacing rods 482 are further extend (relative to those of Fig. 10) and positively coupled to cap 470. Upon initiation of the reverse-flow flushing stage. (Fig. 12) the combined forces of water pressure on the valve body 442 and of the piston 460 are applied ensuring safe closing of the valve.

## Claims

1. A vertical, reverse flow, self-rinsing fluid filtering device (10) comprising:
- a housing (12) with an inlet port (14) for the fluid to be filtered and an outlet port (22) for the filtered fluid;
- a pile of flat filtering discs (D1, D2, D3) positioned in the path of the fluid between the inlet and the outlet ports;
- a fixed member (28) at the bottom of and supporting the pile of discs;
- a displaceable member (70) placed over the top of the discs pile normally applying the inlet fluid pressure for maintaining the pile of discs in a compact state, and being adapted to become displaced upwards under back-pressure applied thereagainst by the reverse flow during the rinsing stage of the filter to free the discs from the compact state;
- partition means (80a, 80b) interposed between any given number of discs, dividing the pile into a number of groups (D1, D2, D3);
- spacer means (82, 84a, 84b) bridging between the displaceable member and each of the partition means so that -
(i) upon an initial displacement of the displaceable member the pile of discs become relieved from the compact state;
(ii) upon a further displacement of the displaceable member along a first preset distance the top-most partition means, along with the first group of discs (D1) supported thereon, become displaced in unison with the displaceable member;
(iii) upon a still further displacement of the displaceable member along a second preset distance the immediately lower partition means, along with the second group of discs (D2) supported thereon, become displaced in unison with the displaceable member;
(iv) and so-forth with respect to the remaining groups, thereby each group becomes relieved from the self-weight of the next- above group.

2. The device as claimed in Claim 1 wherein the displaceable member is operatively associated with a piston (60) being in communication with the reverse-flow pressure.

3. The device as claimed in Claim 2 wherein the partition means comprise a series of rings (80a, 80b).

4. The device as claimed in Claim 3 wherein the spacer means comprise a series of rods (82) extending along the pile of discs and being affixed to the displaceable member at the upper ends thereof, a series of stopper means (84a, 84b) being deployed therealong adapted to progressively engage and lift respective rings during the said displacement of the displaceable member.

5. The device as claimed in Claim 4 wherein the rods extend along the inner surface of the discs pile.

6. The device as claimed in Claim 4 wherein the rods extend along the outer surface of the discs pile.

7. The device as claimed in Claim 3 wherein the spacing means comprise a series of wires (182a, 182b) fastened to the displaceable member at the upper ends thereof, the wires being provided with stopper means (180a, 180b) adapted to progressively engage and lift respective rings during the said displacement of the displaceable member.

8. The device as claimed in Claim 7 wherein the wires extend along the inner surface of the discs pile.

9. The device as claimed in Claim 7 wherein the wires extend along the outer surface of the discs pile.

10. A vertical, reverse flow, self-rinsing fluid filtering device (10) comprising:
- a housing (12) with an inlet port (14) for the fluid to be filtered and an outlet port (22) for the filtered fluid;
- a pile of flat filtering discs (D1, D2, D3) positioned in the path of the fluid between the inlet and the outlet ports;
- a fixed member (224) placed over the top of the discs pile;
- a displaceable member (270) at the bottom of and supporting the pile of discs normally applying the inlet fluid pressure for maintaining the pile of discs in a compact state, and being adapted to become displaced downwards under back-pressure applied thereagainst by a reverse flow during the rinsing stage of the filter to free the discs from the compact state;
- partition means (280a, 280b) interposed between any given number of discs, dividing the pile into a number of groups;
- spacer means (282, 284a, 284b) bridging between the fixed member and each of the partition means so that:
(i) upon an initial displacement of the displaceable member the pile of discs become relieved from the compact state and follow a downward movement;
(ii) upon a further displacement of the displaceable member along a first preset distance the downward movement of the top-most group (D3) becomes blocked by the upper-most partition means (280a);
(iii) upon a further displacement of the displaceable member along a second preset distance, the downward movement of the immediately lower group (D2) becomes blocked by next lower partition means (280b);
(iv) and so-forth with respect to the remaining groups, thereby each group becomes relieved from the self-weight of the next- above group.

11. The device as claimed in Claim 10 wherein the displaceable member is operatively associated with a piston (260) being in communication with the reverse-flow pressure.

12. The device as claimed in Claim 11 wherein the partition means comprises a series of rings (280a, 280b).

13. The device as claimed in Claim 12 wherein the spacer means comprise a series of rods (282) extending along the outside of the pile of discs and being affixed to the fixed member (224) at the upper ends thereof, a series of stopper means (284a, 284b) being deployed therealong adapted to progressively limit the downwards movement of respective rings (280a, 280b) during the said displacement of the displaceable member.

14. The device as claimed in any if Claims 1 or 10 further comprising:
- a plurality of nozzled tubes (30, 130) supporting the pile of discs;
- a one-way valve allowing the flow of the filtered fluid therethrough to the outlet port during the filtering stage of operation, and allowing the flow of the rinsing fluid from the outlet port into the nozzled tubes during the reverse flow stage of operation.

15. The device as claimed in Claim 14 wherein the valve comprises a cone- shaped perforated-cup member (40,140) and a flexible lining sleeve placed therein open in the direction of said outlet port.

16. The device as claimed in Claim 14 wherein the valve comprises a cone- shaped perforated-cup member and a complementary cone-shaped valve body reciprocable within the cup-member between a first, free flowing of the filtered fluid flowing position, and a second, free flowing of the rinsing fluid flowing position.

17. The device as claimed in Claim 16 wherein the partition means comprise a series of rings.

18. The device as claimed in Claim 17 wherein the spacer means comprise a series of rods extending along the inside of the pile of discs and being affixed to the said valve body, a series of stopper means being deployed therealong adapted to progressively engage and lift respective rings by the displacement of the valve body from the first to the second position.

19. The device as claimed in Claim 18 wherein the said rods are affixed to the displaceable member.

## Patentansprüche

1. Vertikale, selbstspülende Vorrichtung zum Filtern von Fluiden nach dem Gegenstromprinzip (10), umfassend:
- ein Gehäuse (12) mit einer Einlassöffnung (14) für das zu filternde Fluid und einer Auslassöffnung (22) für das gefilterte Fluid;
- einen Stapel flacher Filterscheiben (D1, D2, D3), der im Weg des Fluids zwischen Einlass- und Auslassöffnung angeordnet ist;
- ein befestigtes Element (28) am unteren Ende des Scheibenstapels, das diesen stützt;
- ein verschiebbares Element (70), angeordnet über dem oberen Ende des Scheibenstapels, das normalerweise den Einlassdruck des Fluides ausübt, um den Scheibenstapel in einem kompakten Zustand zu halten, und das so angepasst ist, dass es vom Gegenstrom durch den während der Spülphase des Filters ausgeübten Gegendruck nach oben verschoben wird, sodass die Scheiben aus dem kompakten Zustand gelöst werden;
- Trennelemente (80a, 80b), angeordnet zwischen einer beliebigen Anzahl von Scheiben, welche den Stapel in mehrere Gruppen unterteilen (D1, D2, D3);
- Abstandshalter (82, 84a, 84b), welche den Abstand zwischen dem verschiebbaren Element und jedem der Trennelemente so überbrücken, dass:
(i) bei einer anfänglichen Verschiebung des verschiebbaren Elements der Scheibenstapel aus dem kompakten Zustand gelöst wird;
(ii) bei einer weiteren Verschiebung des verschiebbaren Elements über einen ersten vorbestimmten Abstand die obersten Trennelemente, zusammen mit der ersten Gruppe von darauf lagernden Scheiben (D1), gemeinsam mit dem verschiebbaren Element verschoben werden;
(iii) bei noch einer weiteren Verschiebung des verschiebbaren Elements über einen zweiten vorbestimmten Abstand die Trennelemente unmittelbar darunter, zusammen mit der zweiten Gruppe von darauf lagernden Scheiben (D2), gemeinsam mit dem verschiebbaren Element verschoben werden;
(iv) und so weiter in Bezug auf die übrigen Gruppen, wobei jede Gruppe vom Eigengewicht der nächsthöheren Gruppe entlastet wird.

2. Die Vorrichtung nach Anspruch 1, wobei das verschiebbare Element operativ mit einem Kolben (60) verbunden ist, der mit dem Gegenstromdruck in Kommunikation steht.

3. Die Vorrichtung nach Anspruch 2, wobei die Trennelemente eine Reihe von Ringen (80a, 80b) umfassen.

4. Die Vorrichtung nach Anspruch 3, wobei die Abstandshalter eine Reihe von Stäben (82) umfassen, die entlang des Scheibenstapels verlaufen und an den oberen Enden des verschiebbaren Elements angebracht sind, und eine Reihe von Anschlagselementen (84a, 84b), die daran entlang eingesetzt werden und so angepasst sind, dass sie stufenweise die entsprechenden Ringe während der besagten Verschiebung des verschiebbaren Elements greifen und anheben.

5. Die Vorrichtung nach Anspruch 4, wobei die Stäbe entlang der Innenfläche des Scheibenstapels verlaufen.

6. Die Vorrichtung nach Anspruch 4, wobei die Stäbe entlang der Außenfläche des Scheibenstapels verlaufen.

7. Die Vorrichtung nach Anspruch 3, wobei die Abstandshalter eine Reihe von Drähten (182a, 182b) umfassen, welche an den oberen Enden des verschiebbaren Elements befestigt sind, und die Drähte mit Anschlagselementen (180a, 180b) bereitgestellt werden, die so angepasst sind, dass sie stufenweise die entsprechenden Ringe während der besagten Verschiebung des verschiebbaren Elements greifen und anheben.

8. Die Vorrichtung nach Anspruch 7, wobei die Drähte entlang der Innenfläche des Scheibenstapels verlaufen.

9. Die Vorrichtung nach Anspruch 7, wobei die Drähte entlang der Außenfläche des Scheibenstapels verlaufen.

10. Vertikale, selbstspülende Vorrichtung zum Filtern von Fluiden nach dem Gegenstromprinzip (10), umfassend:
- ein Gehäuse (12) mit einer Einlassöffnung (14) für das zu filternde Fluid und einer Auslassöffnung (22) für das gefilterte Fluid;
- einen Stapel flacher Filterscheiben (D1, D2, D3), der im Weg des Fluids zwischen Einlass- und Auslassöffnung angeordnet ist;
- ein befestigtes Element (224), angeordnet über dem oberen Ende des Scheibenstapels;
- ein verschiebbares Element (270) am unteren Ende des Scheibenstapels, das diesen stützt und normalerweise den Einlassdruck des Fluides ausübt, um den Scheibenstapel in einem kompakten Zustand zu halten, und das so angepasst ist, dass es vom Gegenstrom durch den während der Spülphase des Filters ausgeübten Gegendruck nach oben verschoben wird, sodass die Scheiben aus dem kompakten Zustand gelöst werden;
- Trennelemente (280a, 280b), angeordnet zwischen einer beliebigen Anzahl von Scheiben, welche den Stapel in mehrere Gruppen unterteilen;
- Abstandshalter (282, 284a, 284b), welche den Abstand zwischen dem verschiebbaren Element und jedem der Trennelemente so überbrücken, dass:
(i) bei einer anfänglichen Verschiebung des verschiebbaren Elements der Scheibenstapel aus dem kompakten Zustand gelöst wird und einer Abwärtsbewegung folgt;
(ii) bei einer weiteren Verschiebung des verschiebbaren Elements über einen ersten vorbestimmten Abstand die Abwärtsbewegung der obersten Gruppe (D3) durch die obersten Trennelemente (280a) blockiert wird;
(iii) bei noch einer weiteren Verschiebung des verschiebbaren Elements über einen zweiten vorbestimmten Abstand die Abwärtsbewegung der Gruppe unmittelbar darunter (D2) durch die nächstunteren Trennelemente (280b) blockiert wird;
(iv) und so weiter in Bezug auf die übrigen Gruppen, wobei jede Gruppe vom Eigengewicht der nächsthöheren Gruppe entlastet wird.

11. Die Vorrichtung nach Anspruch 10, wobei das verschiebbare Element operativ mit einem Kolben (260) verbunden ist, der mit dem Gegenstromdruck in Kommunikation steht.

12. Die Vorrichtung nach Anspruch 11, wobei das Trennelement eine Reihe von Ringen (280a, 280b) umfasst.

13. Die Vorrichtung nach Anspruch 12, wobei die Abstandshalter eine Reihe von Stäben (282) umfassen, die entlang der Außenseite des Scheibenstapels verlaufen und an den oberen Enden des festen Elements (224) angebracht sind, und eine Reihe von Anschlagselementen (284a, 284b), die daran entlang eingesetzt werden und so angepasst sind, dass sie stufenweise die Abwärtsbewegung der entsprechenden Ringe (280a, 280b) während der besagten Verschiebung des verschiebbaren Elements beschränken.

14. Die Vorrichtung nach einem der Ansprüche 1 oder 10, ferner umfassend:
- eine Mehrzahl von mit Düsen versehenen Rohren (30, 130), welche den Scheibenstapel stützen;
- ein Einwegventil, welches den Durchfluss des gefilterten Fluides hindurch zur Auslassöffnung während der Filterphase des Betriebs und den Durchfluss des Spülfluids von der Auslassöffnung in die mit Düsen versehenen Rohre während der Gegenstromphase des Betriebs ermöglicht.

15. Die Vorrichtung nach Anspruch 14, wobei das Ventil ein kegelförmiges, gelochtes Becherelement (40, 140) und eine flexible Einsatzhülse umfasst, die darin angeordnet und in Richtung der besagten Ausgangsöffnung offen ist.

16. Die Vorrichtung nach Anspruch 14, wobei das Ventil ein kegelförmiges, gelochtes Becherelement und einen darauf abgestimmten kegelförmigen Ventilkörper umfasst, der innerhalb des Becherelements zwischen einer ersten im gefilterten Fluid frei fließenden Strömungsposition und einer zweiten im Spülfluid frei fließenden Strömungsposition hin- und herbewegbar ist.

17. Die Vorrichtung nach Anspruch 16, wobei die Trennelemente eine Reihe von Ringen umfassen.

18. Die Vorrichtung nach Anspruch 17, wobei die Abstandshalter eine Reihe von Stäben umfassen, die entlang der Innenseite des Scheibenstapels verlaufen und an besagtem Ventilkörper angebracht sind, und eine Reihe von Anschlagselementen, die daran entlang eingesetzt werden und so angepasst sind, dass sie stufenweise die entsprechenden Ringe durch die Verschiebung des Ventilkörpers von der ersten zur zweiten Position greifen und anheben.

19. Die Vorrichtung nach Anspruch 18, wobei die besagten Stäbe am verschiebbaren Element angebracht sind.

## Revendications

1. Un appareil de filtrage de fluide auto-rinçant, vertical, à flux inversé (10), comprenant :
- Un boîtier (12) avec un port d'admission (14) pour le fluide devant être filtré et un port de sortie (22) pour le fluide filtré ;
- Une pile de disques de filtrage plats (D1, D2, D3) positionnés sur le passage du fluide entre les ports d'entrée et de sortie ;
- Une pièce fixe (28) au-dessous de la pile de disques et supportant celle-ci ;
- Une pièce déplaçable (70) disposée sur le dessus de la pile de disques appliquant normalement la pression du fluide entrant pour maintenir la pile de disques dans un état compact, et adaptée pour se déplacer vers le haut sous l'application d'une pression par l'arrière sur celle-ci par le flux inversé pendant la phase de rinçage du filtre, pour libérer les disques de l'état compact ;
- Des dispositifs de partition (80a, 80b) interposés entre tout nombre donné de disques, pour diviser la pile en quelques groupes (D1, D2, D3) ;
- Des dispositifs d'espacement (82, 84a, 84b) reliant la pièce déplaçable et chacune des partitions de sorte que -
(i) Lors d'un déplacement initial de la pièce déplaçable, la pile de disques quitte son état compact ;
(ii) Lors d'un déplacement ultérieur de la pièce déplaçable le long d'une première distance prédéterminée, la partition supérieure, ainsi que le premier groupe de disques (D1) appuyés sur celle-ci, se déplace à l'unisson avec la pièce déplaçable ;
(iii) Lors d'un déplacement encore ultérieur de la pièce déplaçable le long d'une seconde distance prédéterminée, la partition immédiatement inférieure, avec le deuxième groupe de disques (D2) appuyés sur celle-ci, se déplace à l'unisson avec la pièce déplaçable ;
(iv) Et ainsi de suite pour les groupes restants, de sorte que chaque groupe est libéré du poids du groupe immédiatement supérieur.

2. Le dispositif décrit dans le cadre de la Revendication 1 par lequel la pièce déplaçable est associée de manière opérative à un piston (60) en communication avec la pression de flux inversé.

3. Le dispositif décrit dans le cadre de la Revendication 2 dans lequel l'élément de partition est composé d'une série d'anneaux (80a, 80b).

4. Le dispositif décrit dans la Revendication 3 dans lequel l'élément d'espacement est composé d'une série de tiges (82) le long de la pile de disques et fixés à la pièce déplaçable au niveau des extrémités supérieures de celle-ci, une série de dispositifs d'arrêt (84a, 84b) étant déployée avec ceci et adaptée de sorte à engager progressivement et soulever les anneaux respectifs pendant le déplacement en question de la pièce déplaçable.

5. Le dispositif décrit dans la Revendication 4 dans lequel les tiges sont placées le long de la surface intérieure de la pile de disques.

6. Le dispositif décrit dans la Revendication 4 dans lequel les tiges sont placées le long de la surface extérieure de la pile de disques.

7. Le dispositif décrit dans la Revendication 3 dans lequel le dispositif d'espacement est composé d'une série de fils (182a, 182b) attachés à la pièce déplaçable au niveau des extrémités supérieures, les fils étant pourvus de dispositifs d'arrêt (180a, 180b) adaptés de manière à engager et soulever progressivement les anneaux respectifs pendant le déplacement correspondant de la pièce déplaçable.

8. Le dispositif décrit dans la Revendication 7 dans lequel les fils sont placés le long de la surface intérieure de la pile de disques.

9. Le dispositif décrit dans la Revendication 7 dans lequel les fils sont placés le long de la surface extérieure de la pile de disques.

10. Un dispositif (10) de filtrage de fluide auto-rinçant, vertical, à flux inversé composé de :
- Un boîtier (12) avec un port d'admission (14) pour le fluide devant être filtré et un port de sortie (22) pour le fluide filtré ;
- Une pile de disques de filtrage plats (D1, D2, D3) positionnés sur le passage du fluide entre les ports d'entrée et de sortie ;
- Une pièce fixe (224) au-dessus de la pile de disques ;
- Une pièce déplaçable (270) disposée sous la pile de disques et soutenant celle-ci appliquant normalement la pression du fluide entrant pour maintenir la pile de disques dans un état compact, et adaptée pour se déplacer vers le bas sous l'application d'une pression par l'arrière sur celle-ci par le flux inversé pendant la phase de rinçage du filtre, pour libérer les disques de l'état compact ;
- Des dispositifs de partition (280a, 280b) interposés entre tout nombre donné de disques, pour diviser la pile en quelques groupes ;
- Des dispositifs d'espacement (282, 284a, 284b) reliant la pièce fixe et chacune des partitions de sorte que :
(i) Lors d'un déplacement initial de la pièce déplaçable, la pile de disques quitte son état compact pour se déplacer vers le bas ;
(ii) Lors d'un déplacement ultérieur de la pièce déplaçable le long d'une première distance prédéterminée, le mouvement vers le bas du groupe le plus élevé (D3) est bloqué par le dispositif de partition supérieur (280a) ;
(iii) Lors d'un déplacement encore ultérieur de la pièce déplaçable le long d'une seconde distance prédéterminée, le mouvement vers le bas du groupe immédiatement inférieur (D2) est bloqué par le dispositif de partition immédiatement inférieur (280b) ;
(iv) Et ainsi de suite pour les groupes restants, de sorte que chaque groupe est libéré du poids du groupe immédiatement supérieur.

11. Le dispositif décrit dans le cadre de la Revendication 10 dans lequel la pièce déplaçable est associée de manière opérative à un piston (260) en communication avec la pression de flux inversé.

12. Le dispositif décrit dans le cadre de la Revendication 11 dans lequel l'élément de partition est composé d'une série d'anneaux (280a, 280b).

13. Le dispositif décrit dans la Revendication 12 dans lequel l'élément d'espacement est composé d'une série de tiges (282) le long de l'extérieur de la pile de disques et fixées à la pièce fixe (224) au niveau des extrémités supérieures de celle-ci, une série de dispositifs d'arrêt (284a, 284b) étant déployée avec ceci et adaptée de manière à limiter progressivement le mouvement vers le bas des anneaux correspondants (280a, 280b) pendant le déplacement en question de la pièce déplaçable.

14. Le dispositif décrit dans toute Revendication 1 à 10 est composé également :
- D'une pluralité de tubes à bec (30, 130) sur lesquels s'appuie la pile de disques ;
- D'une valve unidirectionnelle permettant le flux du fluide filtré dans celle-ci vers le port de sortie pendant la phase filtrage de l'opération, et permettant le flux du fluide de rinçage à partir du port de sortie dans les tubes à bec pendant la phase de flux inversé de l'opération.

15. Le dispositif décrit dans la Revendication 14 dans lequel la valve est composée d'une pièce à cuvette perforée en forme de cône (40,140) et un manchon à revêtement souple placé à l'intérieur et ouvrant dans la direction du port de sortie en question.

16. Le dispositif décrit dans la Revendication 14 dans lequel la valve est composée d'une pièce à cuvette perforée en forme de cône et d'un corps de valve en forme de cône complémentaire inversable dans la pièce cuvette entre une première position de flux libre du fluide filtré et une deuxième position de flux libre du fluide de rinçage.

17. Le dispositif décrit dans la Revendication 16 dans lequel la partition est composée d'une série d'anneaux.

18. Le dispositif décrit dans la Revendication 17 dans lequel le dispositif d'espacement est composé d'une série de tiges le long de l'intérieur de la pile de disques et fixée au corps de la valve en question, une série de dispositifs d'arrêt étant déployée le long de celles-ci et adaptée de manière à engager progressivement et soulever les anneaux respectifs par le déplacement du corps de la valve de la première à la deuxième position.

19. Le dispositif décrit dans la Revendication 18 dans lequel les tiges en question sont fixées à la pièce déplaçable.
